Europäisches Patentamt

European Patent Office

Office européen des brevets

(11) Numéro de publication: **0 333 608**
A2

## (12) DEMANDE DE BREVET EUROPEEN

(21) Numéro de dépôt: **89420096.3**

(51) Int. Cl.⁴: **B 01 D 19/04**

(22) Date de dépôt: **17.03.89**

(30) Priorité: **18.03.88 GB 8806410**

(43) Date de publication de la demande:
**20.09.89 Bulletin 89/38**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Steed, John Kennedy**
**50, Hill Crest Drive**
**Stevenston Ayrshire (GB)**

**Street, George Christopher**
**31, Hill Place**
**Ardrossan Ayrshire (GB)**

**Sweeney, Denis Alan**
**63, Gateside Street**
**West Kilbride Ayrshire KA23 9BB (GB)**

(74) Mandataire: **Seugnet, Jean Louis et al**
**RHONE-POULENC CHIMIE Service Brevets Chimie**
**Centre de Recherches des Carrières B.P. 62**
**F-69192 Saint-Fons Cédex (FR)**

(54) Composition antimousse, procédé pour la préparer et composition agrochimique la contenant.

(57) L'invention concerne une composition antimousse solide qui est stable à l'entreposage et exerce un effet antimousse rapide.

La composition comprend un solide absorbant particulaire comportant, sur sa surface, un mélange antimousse d'un composé antimousse, notamment une silicone, renfermé de façon libérable dans un mélange d'un agent tensio-actif solide, qui peut être un triglycéride polyoxyalkylé d'acide 12-hydroxy-9-octadécènoïque, et d'un agent tensio-actif liquide, qui peut être un copolymère séquencé poly(oxyéthylène)-poly(oxypropylène). Cette composition est de préférence sous forme de poudre.

L'invention s'applique à la lutte contre le moussage dans les produits agrochimiques.

EP 0 333 608 A2

Bundesdruckerei Berlin

**Description**

## COMPOSITION ANTIMOUSSE, PROCEDE POUR LA PREPARER ET COMPOSITION AGROCHIMIQUE LA CONTENANT

La présente invention concerne des compositions antimousse et plus particulièrement des compositions antimousse solides, notamment en poudre.

Les compositions antimousse sont utilisées pour réduire le degré de moussage dans un système. Ces compositions sont très largement employées pour leur incorporation à des détergents à utiliser dans les machines à laver, notamment les machines à chargement par le devant ou les lave-vaisselle. En cas de mélange avec des détergents, il est important que l'antimousse et le détergent ne réagissent pas entre eux et ne perturbent pas chacun l'action de l'autre. Le composant antimousse actif de nombreuses compositions antimousse est, ou comprend, un composé du type silicone. Les silicones qui sont utilisées dans les compositions antimousse sont typiquement des liquides et, afin de minimiser l'interaction avec un détergent, il est souhaitable que l'antimousse soit une substance solide. Il y a eu de nombreuses propositions de compositions antimousse dans lesquelles la silicone liquide est incorporée à un solide, soit sur la surface du solide, comme cela est décrit, entre autres, dans le brevet britannique N° 1 378 874, soit par encapsulation au moins partielle dans une matière appropriée, comme cela est décrit, entre autres, dans le brevet britannique N° 1 407 997, le brevet britannique N° 1 523 957, et EP-A-0 210 721. Cependant, bien que les systèmes de ce type possèdent certaines caractéristiques intéressantes, la Demanderesse a constaté qu'ils ne sont pas utilisables dans toutes les situations où une composition antimousse est demandée.

Beaucoup de produits agrochimiques, tels que des herbicides, insecticides et fongicides, sont vendus soit sous forme de matières solides, soit sous forme de liquides concentrés. Dans l'un ou l'autre cas, afin d'appliquer ces produits agrochimiques, ceux-ci sont dilués avec de l'eau et appliqués par un dispositif pulvérisateur. Cependant, la dilution du produit agrochimique peut entraîner un moussage du mélange, ce moussage pouvant s'accentuer pendant l'opération de pulvérisation, notamment si le terrain est inégal. Le moussage peut occasionner une perte du mélange en le faisant sortir du réservoir du pulvérisateur, ou encore une pulvérisation irrégulière ou l'impossibilité de parvenir à la dilution voulue du produit agrochimique. Afin de réduire ce moussage, il est souhaitable d'ajouter une composition antimousse au produit agrochimique. Cependant, il est souhaitable que la composition antimousse exerce un effet rapide étant donné que le moussage survient d'habitude rapidement lorsque le produit agrochimique est mélangé avec de l'eau, et un effet antimousse rapide est donc nécessaire pour contrecarrer le moussage. La Demanderesse a constaté que les systèmes qui sont efficaces comme agents antimousse dans les détergents n'assurent généralement pas un effet antimousse suffisamment rapide pour être utiles dans un mélange agrochimique.

La Demanderesse a maintenant obtenu une composition antimousse qui exerce un effet antimousse suffisamment rapide, qui est stable à l'entreposage et qui peut être mélangée avec un produit agrochimique tout en conservant l'essentiel de son efficacité.

Selon la présente invention, il est fourni une composition antimousse solide qui comprend un solide absorbant particulaire comportant, sur sa surface, un mélange antimousse d'un composé antimousse renfermé, de façon libérable, dans un mélange d'un agent tensio-actif solide et d'un agent tensio-actif liquide.

Dans la composition antimousse de la présente invention, on peut utiliser n'importe quel composé antimousse qui est efficace comme agent antimousse dans un milieu aqueux. Le composé antimousse est très commodément un composé antimousse du type silicone tel qu'un polydiorganosiloxane, qui peut être ou ne pas être coiffé à ses extrémités. La silicone est notamment un polydiméthylsiloxane qui est terminé par des radicaux hydroxyle ou coiffé à ses extrémités par un groupe non réactif, en particulier un groupe triorganosiloxy tel qu'un groupe triméthylsiloxy. La silicone est typiquement un liquide. Le poids moléculaire des liquides de silicone appropriés qui peuvent être utilisés dans les compositions de la présente invention est tel que la viscosité du liquide, mesurée à 25°C, s'inscrive dans l'intervalle de 50 $mm^2s^{-1}$ au moins à 20 000 $mm^2s^{-1}$ au plus. Des liquides de silicone particulièrement appropriés ont une viscosité d'au moins 100 $mm^2s^{-1}$ et d'au plus 10 000 $mm^2s^{-1}$, notamment de 500 $mm^2s^{-1}$ à 2500 $mm^2s^{-1}$, telle que mesurée par un viscosimètre à tube en U d'Otswald ou par un viscosimètre à broche rotative, tel qu'un viscosimètre Brookfield RVF, selon la viscosité du liquide. Plus particulièrement, un viscosimètre à tube en U d'Ostwald est utilisé lorsque la viscosité est inférieure à 1 000 $mm,^2s^{-1}$ environ, et le viscosimètre Brookfield est utilisé pour mesurer les viscosités plus élevées.

Le composé antimousse est typiquement utilisé sous la forme d'un composé antimousse liquide contenant un solide particulaire. Le solide particulaire peut être présent en une quantité de 1 % à 100 % du poids du composé antimousse, et il est typiquement présent en une quantité de 1 % à 20 % de ce poids. Le solide particulaire peut être choisi parmi les oxydes, carbonates et silicates minéraux, et des matières organiques solides, par exemple un amide tel que le distéarimide d'éthylène-diamine. Le solide particulaire est typiquement un oxyde minéral tel que l'alumine ou, de préférence, la silice. Le solide particulaire possède de préférence une grande surface spécifique qui est typiquement d'au moins 50 $m^2g^{-1}$, par exemple d'au moins 100 $m^2g^{-1}$. Si le solide particulaire est de la silice, un type approprié de silice est la silice de fumée ou la silice précipitée. Le solide particulaire a de préférence subi un traitement destiné à le rendre hydrophobe. N'importe quelle technique appropriée peut être employée pour rendre le solide hydrophobe. Un solide hydrophobe préféré est une silice silylée, c'est-à-dire une silice comportant à sa surface des groupes organosiliciés tels qu'il en résulte du traitement de la silice par un halogénure de triorganosilicium tel que le triméthylchlorosilane ou l'hexaméthyldisilazane.

L'agent tensio-actif solide peut être un agent tensio-actif cationique, anionique, amphotère ou non ionique. L'agent tensio-actif solide est commodément un agent tensio-actif non ionique. L'agent tensio-actif solide est très avantageusement une substance soluble ou dispersable dans l'eau. Les agents tensio-actifs solides préférés ont un point de fusion d'au moins 30°C. La demanderesse a constaté que la stabilité à l'entreposage de la composition antimousse de la présente invention s'améliore à mesure que s'élève le point de fusion de l'agent tensio-actif solide. Cependant, en général, la vitesse à laquelle la composition antimousse se dissout ou se disperse dans l'eau est défavorablement affectée par une élévation du point de fusion de l'agent tensio-actif solide. Par suite, il est généralement préférable que le point de fusion de l'agent tensio-actif solide ne dépasse pas 100°C et, notamment, ne dépasse pas 60°C. Pour de nombreuses applications, on obtient une composition antimousse efficace en utilisant, comme composant tensio-actif solide, une substance dont le point de fusion est d'environ 40°C. On notera que le point de fusion de l'agent tensio-actif solide doit être tel que la composition antimousse reste solide dans les conditions ambiantes où elle doit être utilisée. De ce fait, pour une utilisation dans un environnement où la température ambiante est élevée, c'est-à-dire d'au moins 30°C, il, est bon d'utiliser un agent tensio-actif solide dont le point de fusion soit d'au moins 40°C.

L'agent tensio-actif liquide peut être un agent tensio-actif cationique, anionique, amphotère ou non ionique, et il s'agit commodément d'un agent tensio-actif non ionique. Il est très avantageux que l'agent tensio-actif liquide soit une substance soluble ou dispersable dans l'eau. Le point de fusion de l'agent tensio-actif liquide doit être tel que cette substance soit liquide dans les conditions ambiantes et, de préférence, le point de fusion est inférieur à 10°C et ne dépasse notamment pas 0°C.

Les agents tensio-actifs solide et liquide ne doivent pas réagir entre eux et perturber ainsi chacun l'action de l'autre. De ce fait, bien que l'un, ou les deux, des agents tensio-actifs solide et liquide puissent être des substances ioniques, il n'est pas souhaitable que l'un soit anionique et l'autre cationique. Les agents tensio-actifs solide et liquide peuvent être tous deux anioniques ou tous deux cationiques, mais il est préférable que l'un au moins soit non ionique, et notamment qu'ils soient tous deux non ioniques.

Les agents tensio-actifs solide et liquide peuvent être du type "peu moussant". Par "peu moussant", on entend une substance qui, lorsqu'elle est utilisée en solution à 0,1 % en poids/volume dans l'eau dans l'essai de Ross-Miles, donne une hauteur de mousse non supérieure à 30 mm à 25°C. Il est préférable que l'agent tensio-actif liquide soit du type peu moussant.

Les agents tensio-actifs solide et liquide peuvent être tous deux des composés oxyalkylés, notamment des composés polyoxyéthylés.

Ainsi, l'agent tensio-actif solide peut être un ester, un phénol, un éther, une amine ou un alcool, qui est polyoxyalkylé, et notamment polyoxyéthylé. Le fragment polyoxyalkyle contient typiquement au moins 10 et au plus 400 groupes oxyalkylènes, notamment oxyéthylène . L'agent tensio-actif solide est de préférence une substance qui contient, en moyenne, au moins 20 et au plus 250 groupes oxyéthylène.

Si l'agent tensio-actif solide est un alcool polyoxyalkylé, il est préférable que l'alcool soit un alcool supérieur, c'est-à-dire un alcool contenant plus de six atomes de carbone, et en particulier un alcool contenant au moins huit atomes de carbone. L'alcool peut consister en un mélange de groupes hydrocarbyles par exemple un mélange de groupes alkyles contenant 13 à 15 atomes de carbone ou, en variante, un mélange de groupes nonyles. L'alcool peut être un alcool saturé ou insaturé, comme par exemple un alcool nonylique, tridécylique, pentadécylique, hexadécylique, octadécylique ou octadécénylique. Des exemples d'alcools polyoxyalkylés comprennent un mélange synthétique polyoxyéthylé (20) d'alcools primaires contenant 13 à 15 atomes de carbone, un alcool octadécylique polyoxyéthylé (30) et un alcool hexadécylique polyoxy éthylé (20), le nombre figurant entre parenthèses indiquant le nombre moyen de groupes oxyéthylène ($C_2H_4O$) par molécule.

L'agent tensio-actif solide peut être un phénol polyoxyalkylé, en particulier un alkylphénol tel qu'un 4-(alkyle supérieur)phénol. Un phénol approprié est un 4-nonylphénol contenant un mélange de groupes nonyles isomères. Des exemples de phénols polyoxyalkylés comprennent un 4-nonylphénol polyoxyéthylé (20) et un 4-nonylphénol polyoxyéthylé (30).

En variante, l'agent tensio-actif solide peut être un ester oxyalkylé. Ces esters peuvent être des acides carboxyliques oxyalkylés où l'acide contient plus de six atomes de carbone et, en particulier, au moins 10 atomes de carbone, comme par exemple l'acide décanoïque, l'acide tétradécanoïque, l'acide hexadécanoïque, l'acide octadécanoïque, un acide insaturé tel que l'acide 9-octadécénoïque, ou un acide ou mélange d'acides provenant de sources végétales ou animales tel que, par exemple, un mélange d'acides de suif. Les esters oxyalkylés de ce type contiennent commodément, en moyenne, 5 à 100 groupes oxyalkylènes qui sont typiquement des groupes oxyéthylène . D'autres esters oxyéthylés peuvent être des esters formés d'avance qui contiennent au moins un groupe -OH n'ayant pas réagi, par exemple un monoester de sorbitanne ou un ester d'un hydroxy-acide tel que l'acide 12-hydroxy-octadécanoïque ou l'acide 12-hydroxy-9-octadécénoïque. Des monoesters de sorbitanne appropriés comprennent le mono-octadécanoate de sorbitanne. On peut utiliser des esters oxyalkylés, par exemple les triesters, ou des mélanges contenant principalement les triesters, du glycérol avec l'acide 12-hydroxy-octadécanoïque ou avec l'acide 12-hydroxy-9-octadécénoïque, par exemple de tels esters qui contiennent, en moyenne, entre 20 et 200 groupes oxyéthylène , le point de fusion de ces substances s'inscrivant généralement dans l'intervalle de 30°C à 50°C.

La Demanderesse a obtenu des compositions antimousse solides qui offrent une intéressante combinaison de propriétés en utilisant, comme agent tensio-actif solide, un ester mixte oxyéthylé, principalement

3

constitué du triester, du glycérol avec soit l'acide 12-hydroxy-octadécanoîque, soit l'acide 12-hydroxy-9-octadécénoîque et contenant, en moyenne, entre 20 et 200 groupes oxyéthylène.

L'agent tensio-actif liquide peut être du même type général que l'agent tensio-actif solide, mais contenir moins de groupes oxyalkylènes. Des agents tensio-actifs liquides typiques de ce type contiennent, en moyenne, moins de 20 groupes oxyalkylènes, notamment oxyéthylène, et contiennent en particulier moins de 15 groupes oxyalkylènes, notamment oxyéthylène. Les agents tensio-actifs liquides comprennent des phénols oxyalkylés tels que le 4-octylphénol polyoxyéthylé (9), le 4-nonylphénol polyoxyéthylé (8) et le 4-nonylphénol polyoxyéthylé (12); des alcools oxyalkylés tels que l'alcool tridécylique polyoxyéthylé (6), l'alcool tridécylique polyoxyéthylé (12) et un mélange polyoxyéthylé (7) d'alcools contenant 8 à 10 atomes de carbone; et des esters oxyalkylés.

D'autres agents tensio-actifs liquides sont des copolymères oxyde d'éthylène/oxyde de propylène, en particulier ceux qui contiennent des séquences d'oxyde d'éthylène et des séquences d'oxyde de propylène. Les substances de ce type englobent des composés dans lesquels les segments de copolymère oxyde d'éthylène/oxyde de propylène sont condensés sur un alcool ou une amine, par exemple un alcool contenant plus de six atomes de carbone ou une diamine telle que l'éthylènediamine. La teneur en oxyde d'éthylène de ces copolymères est typiquement d'au moins 4, et au plus 40, motifs oxyde d'éthylène. La teneur en oxyde de propylène de ces copolymères est typiquement d'au moins 3, et au plus 120, motifs oxyde de propylène. Des exemples de composés ayant des segments de copolymère condensés sur un alcool ou une amine comprennent les composés des types :

$RO(PO)_m(EO)_nH$ et
$[HO(EO)_w(PO)_x]_2N(CH_2)_aN[(PO)_y(EO)_zOH]_2$

où : R est un groupe alkyle, ou un mélange de groupes alkyles, contenant plus de six atomes de carbone;
EO est un groupe oxyde d'éthylène;
PO est un groupe oxyde de propylène;
m est un nombre entier, avec une valeur moyenne d'au moins 6;
n est un nombre entier, avec une valeur moyenne d'au moins 4;
a est un nombre entier ayant une valeur de 2 à 6;
w est un nombre entier, avec une valeur moyenne d'au moins 2;
x est un nombre entier, avec une valeur moyenne d'au moins 4;
y est un nombre entier, avec une valeur moyenne d'au moins 4;
z est un nombre entier, avec une valeur moyenne d'au moins 2;
les valeurs de w, x, y et z pouvant être différentes dans les différents groupes fixés à l'atome d'azote. Les composés de ce type englobent un composé dans lequel R est un mélange de groupes alkyles contenant 13 à 15 atomes de carbone, la valeur moyenne de m est de 6 à 15 et la valeur moyenne de n est de 4 à 20, et un composé dans lequel a est 2, w et z ont chacun, indépendamment, une valeur moyenne de 2 à 10, et x et y ont chacun, indépendamment, une valeur moyenne de 4 à 30.

Un agent tensio-actif liquide approprié est du type :
$HO(PO)_b(EO)_c(PO)_dH$
ou
$HO(EO)_e(PO)_f(EO)_gH$

où : b, c, d, e, f et g sont des nombres entiers;
la valeur moyenne de f, ou de la somme b + d, est de 14 à 75;
la valeur moyenne de c, ou de la somme e + g, est de 3 à 45; et
les valeurs de b, c et d, ou de e, f et g, sont telles que les motifs oxyde d'éthylène constituent moins de 50 % en poids du copolymère.

Le copolymère contient très préférablement au moins 10 % en poids de motifs oxyde d'éthylène et ne contient typiquement pas plus de 45 % en poids de motifs oxyde d'éthylène, comme par exemple 12 à 35 % en poids de motifs oxyde d'éthylène. Des copolymères appropriés de ce type ont un poids moléculaire moyen d'au moins 1000 et, typiquement, le poids moléculaire moyen ne dépasse pas 10 000. Des copolymères particulièrement utiles ont un poids moléculaire moyen qui s'inscrit dans la gamme de 1500 à 5000. Les polymères de ce type sont typiquement préparés par la condensation d'oxyde de propylène sur une base de polyoxyéthylène-glycol, ou par la condensation d'oxyde d'éthylène sur une base de polyoxypropylène-glycol. Comme indiqué plus haut, l'agent tensio -actif liquide est de préférence du type peu moussant (comme défini précédemment).

L'agent tensio-actif solide ou l'agent tensio-actif liquide, ou leur mélange, peut inclure une petite proportion d'un agent épaississant. Des agents épaississants appropriés sont des solides finement divisés, en particulier des oxydes minéraux, par exemple une silice hydrophile, notamment la silice de fumée. L'agent épaississant est très commodément un solide ayant une grande surface spécifique, par exemple supérieure à 100 $m^2g^{-1}$.

Le dernier composant de la composition antimousse solide en poudre est un solide absorbant particulaire. Le solide absorbant particulaire peut être, par exemple, un oxyde, carbonate ou silicate minéral. Le solide particulaire est typiquement un solide ayant une grande surface spécifique et il est de préférence poreux. Un solide absorbant approprié est une silice hydrophile, notamment une silice précipitée, en particulier une silice ayant une surface spécifique d'au moins 200 $m^2g^{-1}$, par exemple de 400 $m^2g^{-1}$ ou même davantage. En général, le type de silice qui convient pour être utilisé comme agent épaississant n'est pas utilisable comme solide absorbant particulaire.

4

Une composition antimousse solide selon la présente invention, qui offre une intéressante combinaison de propriétés, est essentiellement constituée d'une silice hydrophile ayant une surface spécifique d'au moins 200 $m^2g^{-1}$ et comportant sur sa surface un polydiméthylsiloxane ayant une viscosité de 500 à 2500 $mm^2s^{-1}$ et contenant une silice hydrophobe ayant une surface spécifique d'au moins 50 $m^2g^{-1}$, le polydiméthylsiloxane étant renfermé, de façon libérable, dans un mélange d'un ester mixte oxyéthylé, principalement le triester, du glycérol avec soit l'acide 12-hydroxy-octadécanoïque, soit l'acide 12-hydroxy-9-octadécénoïque, d'un copolymère séquencé oxyde d'éthylène/oxyde de propylène obtenu soit par la condensation d'oxyde de propylène sur une base de polyoxyéthylène-glycol, soit par la condensation d'oxyde d'éthylène sur une base de polyoxypropylène-glycol, et d'un agent épaississant qui est une silice hydrophile ayant une surface spécifique d'au moins 100 $m^2g^{-1}$.

La composition antimousse solide est de préférence sous forme d'une poudre, c'est-à-dire une matière particulaire s'écoulant librement dont les particules sont essentiellement sphériques.

Les proportions des composants de la composition antimousse de la présente invention peuvent être diversifiées selon la nature des composants. Le composé antimousse peut constituer jusqu'à 25 % en poids de la composition et il constitue généralement au moins 5 % en poids de la composition. De préférence, la composition contient 10 % à 20 % en poids, par exemple environ 15 % en poids, du composé antimousse. Le composé antimousse est typiquement un liquide de silicone et il peut contenir un solide particulaire en une quantité allant jusqu'à 100 % du poids de la silicone, et cette quantité est typiquement de 1 % à 20 % du poids de la silicone.

L'agent tensio-actif solide est présent en une quantité telle que la composition antimousse soit solide. Typiquement, l'agent tensio-actif solide est présent en une proportion de 5 % à 35 % en poids de la composition, de préférence de 10 % à 30 % en poids de la composition, par exemple d'environ 20 % en poids.

L'agent tensio-actif liquide peut être présent en une proportion allant jusqu'à 60 % en poids de la composition antimousse et, de préférence, cette proportion est d'au moins 20 % en poids de la composition. En général, la composition contient 30 % à 45 %, par exemple environ 40 %, en poids de l'agent tensio-actif liquide.

Si un agent épaississant est présent, sa proportion ne dépasse pas, de préférence, 5 % en poids de la composition antimousse. En général, il y a environ 1 % en poids d'un agent épaississant.

Le solide absorbant particulaire peut être présent en une proportion allant jusqu'à 50 % en poids de la composition antimousse. En général, il y a au moins 10 % en poids du solide absorbant particulaire, et notamment au moins 20 % en poids, par exemple 25 % en poids.

Les compositions antimousse préférées selon la présente invention sont des poudres qui peuvent être entreposées pendant une longue période de temps sans perte d'efficacité et qui exercent un effet antimousse rapide. La composition antimousse peut être utilisée dans des formulations agrochimiques, soit en prémélangeant la composition antimousse avec une formulation agrochimique solide, soit en ajoutant séparément la composition antimousse à la formulation agrochimique au cours de la dilution précédant l'emploi.

Ainsi, sous un autre aspect de la présente invention, il est fourni une composition agrochimique qui contient une composition antimousse selon la présente invention.

Si la composition agrochimique est un solide, la composition antimousse peut lui être mélangée par toute technique appropriée pour mélanger des solides, par exemple par mélange dans un tambour.

Si la composition agrochimique est à l'état liquide, par exemple sous forme de concentré, la composition antimousse est commodément ajoutée lorsque le concentré est dilué avant la pulvérisation.

La composition antimousse est utilisée en une quantité qui n'est de préférence pas supérieure à 1 % en poids par rapport à la totalité de la composition agrochimique. La quantité de la composition antimousse n'est généralement pas inférieure à 0,02 % en poids. La quantité de la composition antimousse dépend au moins dans un certaine mesure des caractéristiques de moussage présentées par la composition agrochimique en l'absence de la composition antimousse. En général, un mélange offrant une combinaison satisfaisante de propriétés est obtenu lorsque la proportion de la composition antimousse est de 0,1 à 0,5 % en poids par rapport à la composition agrochimique.

La composition agrochimique peut contenir un herbicide, un insecticide ou un fongicide, ou bien il peut s'agir d'un mélange contenant au moins deux composants qui peuvent être de types semblables ou différents. La composition agrochimique peut être une composition du commerce. La composition agrochimique peut ne contenir qu'un ou plusieurs herbicides, insecticides ou fongicides. Cependant, beaucoup de compositions agrochimiques comprennent une charge inerte et également, pour faciliter le mouillage et la dispersion de l'ingrédient actif de la composition agrochimique, un agent mouillant, un agent dispersant, ou les deux. On peut utiliser n'importe quel agent mouillant ou agent dispersant approprié.

La composition antimousse peut provoquer une importante réduction de la hauteur de mousse initiale, ainsi qu'une diminution du temps mis pour que la mousse disparaisse en totalité. De plus, cet effet reste essentiellement inchangé, même lorsque la composition antimousse a été entreposée pendant plusieurs mois à la température ambiante, ou même à une température plus élevée comme de 40°C.

Les compositions antimousse de la présente invention peuvent être préparées par toute technique appropriée. Une technique commode consiste à revêtir le solide absorbant particulaire avec un mélange liquide de tous les autres composants de la composition. Le mélange liquide peut être versé sur le solide absorbant particulaire tandis que celui-ci est agité énergiquement. En variante, le mélange liquide peut être pulvérisé par un dispositif pulvérisateur approprié sur le solide absorbant particulaire, tandis que le solide est agité. Le dispositif pulvérisateur est commodément un atomiseur du type qui est utilisé dans les procédés de séchage par atomisation, par exemple une buse d'atomisation ou un disque d'atomisation. Le mélange liquide doit être à une température supérieure au point de fusion de l'agent tensio-actif solide et il est de préférence à une température d'au moins 50°C. Cependant, la température du mélange liquide ne dépasse pas, de préférence, 100°C.

Le mélange liquide peut être préparé en ajoutant ses composants les uns aux autres en tout ordre approprié. Ainsi, on peut mélanger l'agent tensio-actif liquide avec l'agent tensio-actif solide à une température supérieure au point de fusion de l'agent tensio-actif solide, ajouter l'agent épaississant facultatif, puis ajouter le composé antimousse, y compris tout solide particulaire qui est mélangé au composé antimousse. En variante, on peut mélanger préalablement l'agent tensio-actif liquide et le composé antimousse, puis ajouter l'agent tensio-actif solide à l'état fondu, suivi par l'agent épaississant facultatif. Une fois que le mélange liquide a été préparé, il est commodément appliqué sur le solide absorbant particulaire sans délai excessif.

Les compositions antimousse de la présente invention sont particulièrement adaptées à une utilisasation avec des compositions agrochimiques car elles exercent un effet antimousse rapide lorsqu'elles sont ajoutées à de l'eau. Cependant, les compositions antimousse peuvent être utilisées dans toute application où l'on souhaite limiter le moussage et, en particulier, dans des applications où un effet antimousse rapide est nécessaire.

Les exemples non limitatifs suivants illustrent diverses formes de réalisation de la présente invention afin de mieux faire comprendre ses divers aspects. Dans les exemples et les exemples comparatifs, toutes les parties sont exprimées en poids, sauf indication contraire.

Exemple 1

Dans un bécher en acier inoxydable d'une contenance de 500 cm$^3$, on place 17,3 parties d'un fluide de alpha,oméga-triméthylsiloxypolydiméthylsiloxane ayant une viscosité comprise entre 950 et 1050 mm$^2$s$^{-1}$ et contenant 4,228 % en poids, par rapport au fluide de siloxane, d'une silice de fumée silylée hydrophobe. Au bécher et à son contenu, on ajoute 44,55 parties d'un agent tensio-actif non ionique liquide obtenu par la condensation d'oxyde de propylène sur une base de polyoxyéthylène-glycol. L'agent tensio-actif liquide contient environ 20 % en poids de motifs oxyde d'éthylène et son poids moléculaire moyen est d'environ 3200. Pour s'assurer d'un bon mélange, on agite le fluide de siloxane pendant l'addition de l'agent tensio-actif liquide en utilisant un agitateur de laboratoire Greaves, type GM-A, fonctionnant à 3000 tr/min.

On chauffe à 50°C un agent tensio-actif solide dont l'intervalle de fusion est de 42-48°C et qui est un ester mixte, principalement le triglycéride, de l'acide 12-hydroxy-octadécanoîque, ayant été oxyéthylé en utilisant 200 moles d'oxyde d'éthylène par mole du triglycéride. On ajoute 12,4 parties de la substance fondue au mélange sous agitation énergique du fluide de siloxane et de l'agent tensio-actif liquide à une température de 70°C. Au mélange sous agitation ainsi obtenu, on ajoute, tout en continuant à agiter, 0,75 partie d'une silice hydrophile (>99,8 % de silice) ayant une surface spécifique de 200 ± 25 m$^2$g$^{-1}$ et ayant une grosseur de particules primaires de 12 nanomètres. On remue ensuite ce mélange à une température d'environ 70°C pour obtenir une composition homogène capable de s'écouler.

On ajoute, en une période d'une minute, la composition capable de s'écouler résultante à 25 parties d'une silice hydrophile (99 % de silice) ayant une surface spécifique de 450 m$^2$g$^{-1}$. On agite la silice hydrophile dans un mélangeur domestique de produits alimentaires, et l'on continue à mélanger pendant toute l'addition de la composition capable de s'écouler et pendant encore 10 minutes après avoir terminé l'addition, afin d'obtenir une poudre s'écoulant librement.

On soumet la composition obtenue à un essai d'inhibition de mousse dont le mode opératoire est exposé ci-dessous.

Mode opératoire de l'essai d'inhibition de mousse

L'appareil utilisé comprend un bécher en acier inoxydable d'une contenance de 5 dm$^3$ comportant un tube de sortie soudé au bécher, le centre du tube étant à 2,5 cm de la base du bécher. Le tube de sortie est relié à une pompe centrifuge de circulation par l'intermédiaire d'une longueur de tuyau tenant la pression (environ 100 cm). L'une des extrémités d'une longueur de tuyau tenant la pression (environ 65 cm) est montée sur la sortie de la pompe et l'autre extrémité est fixée de manière à diriger le courant d'eau dans le bécher en acier inoxydable, au niveau du sommet.

Le bécher est pourvu d'un trait de repère, tracé tout autour de l'intérieur du bécher, qui indique une capacité de 2,5 dm$^3$. D'autres traits sont tracés à intervalles de 2,54 cm de part et d'autre du trait de repère indiquant 2,5 dm$^3$.

Pour effectuer l'essai, on place 2,5 dm$^3$ d'eau désionisée dans le bécher et on la fait circuler par les tuyaux et la pompe à une vitesse de 500 dm$^3$/heure. On ajoute 0,2 g de l'antimousse, sous forme d'un solide, à l'eau circulante. On laisse l'antimousse se disperser pendant une minute, puis on ajoute 25 cm$^3$ d'une solution à 15 % en poids/volume d'un détergent (le sel d'ammonium de sulfate d'alcool laurylique éthoxylé) dans de l'eau, et l'on déclenche un chronomètre pour mesurer le temps de la montée de la mousse. On continue à faire circuler l'eau avec les additifs et l'on note le temps mis pour que la mousse s'élève au-delà de chaque trait de repère.

Le Tableau I présente les résultats obtenus en la présence et l'absence de diverses compositions antimousses, dont certaines ont été conservées (entreposées) pendant plusieurs mois à la température ambiante.

Tableau I

| Essai N° | Type d'anti-mousse (a) | Temps (en secondes) pour atteindre les traits | | | | |
|---|---|---|---|---|---|---|
| | | Trait 1 | Trait 2 | Trait 3 | Trait 4 | Trait 5 |
| I | NEANT | 4 | 11 | 25 | 41 | 62 |
| II | 1 | 15 | 194 | 282 | 365 | 467 |
| III | 1R | 29 | 157 | 272 | 360 | 460 |
| IV | NEANT | 7 | 24 | 47 | 80 | 114 |
| V | I | 9 | 86 | 195 | 321 | 468 |
| VI | IR | 7 | 24 | 76 | 125 | 184 |
| VII | NEANT | 4 | 11 | 21 | 32 | 51 |
| VIII | II | 6 | 22 | 95 | 202 | 330 |
| IX | IIR | 4 | 11 | 19 | 29 | 40 |

Remarques sur le Tableau I

(a) NEANT indique que le moussage a été effectué en l'absence de produit antimousse. Plusieurs répétitions sont effectuées à différents moments et les résultats en l'absence de produit antimousse sont cités avant les résultats obtenus pendant la même série d'essais en présence d'un produit antimousse.

1 est le produit de l'Exemple 1.

1R est le produit de l'Exemple 1 après conservation pendant 5 mois à la température ambiante (20-25°C).

I est un produit antimousse préparé comme décrit à l'Exemple 1, excepté que l'agent tensio-actif solide en est omis.

IR est le produit antimousse I après conservation pendant 3 mois à la température ambiante (20-25°C).

II est un produit antimousse préparé comme décrit à l'Exemple 1, excepté que l'agent tensio-actif liquide en est omis.

IIR est le produit antimousse II après conservation pendant 3 jours à la température ambiante (20-25°C).

On observera que le produit antimousse I (non conforme à l'invention) est efficace initialement, mais est beaucoup moins efficace après avoir été conservé. On observera de plus que le produit antimousse II (également non conforme à l'invention) n'assure pas un effet antimousse rapide et se dégrade après seulement quelques jours de conservation. On notera que les essais I et IV à IX sont donnés à des fins de comparaison et que les essais II et III sont réalisés en utilisant le produit de l'Exemple 1, qui est un produit conforme à la présente invention.

Exemple 2

On entrepose à 40°C un échantillon du produit de l'Exemple 1 durant une période de 3,5 mois. On détermine ensuite l'effet antimousse du produit entreposé, en suivant le mode opératoire d'essai exposé précédemment. Le Tableau II présente le résultat obtenu à côté du résultat pour le produit de l'Exemple 1 tel que préparé.

Tableau II

| Essai N° | Type d'anti-mousse (a)(b) | Temps (en secondes) pour atteindre les traits | | | | |
|---|---|---|---|---|---|---|
| | | Trait 1 | Trait 2 | Trait 3 | Trait 4 | Trait 5 |
| II | 1 | 15 | 194 | 282 | 365 | 467 |
| X | 2 | 31 | 153 | 261 | 345 | 450 |

Remarques sur le Tableau II

(a) est comme défini dans les Remarques sur le Tableau I.

(b) 2 est le produit de l'Exemple 2 (c'est-à-dire le produit de l'Exemple 1 qui a été entreposé pendant 3,5 mois à 40°C).

On observera que les caractéristiques antimousse des types d'antimousse 1 et 2 sont très semblables et, ainsi, que les caractéristiques antimousse du produit de l'Exemple 1 restent essentiellement inchangées après entreposage pendant 3,5 mois à 40°C.

Exemple 3

On reprend le mode opératoire de l'Exemple 1, excepté que l'on change les proportions des composants et que l'on utilise un agent tensio-actif solide différent. Le point de fusion de l'agent tensio-actif solide est d'environ 33°C et il s'agit du triglycéride de l'acide 12-hydroxy-9-octadécénoïque, ayant été éthoxylé en utilisant 54 moles d'oxyde d'éthylène par mole du triglycéride. On prépare la composition en utilisant 15,4 parties du fluide de siloxane contenant la silice hydrophobe, 39,6 parties de l'agent tensio-actif liquide, 19,3 parties de l'agent tensio-actif solide fondant à 33°C, 0,7 partie de la silice hydrophile ayant une surface spécifique de $200 \pm 25 \ m^2g^{-1}$ et 25 parties de la silice hydrophile ayant une surface spécifique de $450 \ m^2g^{-1}$.

Exemple 4

On entrepose à 40°C un échantillon du produit de l'Exemple 3 durant une période d'un mois.

Exemple 5

On reprend le mode opératoire de l'Exemple 3, excepté que l'on utilise un agent tensio-actif solide différent. Le point de fusion de l'agent tensio-actif solide est d'environ 39°C et il s'agit du triglycéride de l'acide 12-hydroxy-octadécanoïque, ayant été éthoxylé en utilisant 54 moles d'oxyde d'éthylène par mole du triglycéride.

Exemple 6

On entrepose à 40°C un échantillon du produit de l'Exemple 4 durant une période de 3,5 mois.

On soumet les produits décrits dans les Exemples 3 à 6 à l'essai d'inhibition de mousse précédemment exposé. Le Tableau III présente les résultats obtenus.

Tableau III

| Essai N° | Type d'anti-mousse (c) | Temps (en secondes) pour atteindre les traits | | | | |
|---|---|---|---|---|---|---|
| | | Trait 1 | Trait 2 | Trait 3 | Trait 4 | Trait 5 |
| XI | 3 | 64 | 286 | 386 | 499 | 601 |
| XII | 4 | 50 | 190 | 271 | 359 | 468 |
| XIII | 5 | 25 | 236 | 400 | 509 | 675 |
| XIV | 6 | 12 | 115 | 213 | 260 | 400 |

Remarques sur le Tableau III

(c) 3 à 6 indiquent respectivement les produits des Exemples 3 à 6.

Exemples 7 à 18

On mélange avec une formulation agrochimique les produits des Exemples 1 et 5, ainsi que des échantillons de ces produits que ont été entreposés pendant plusieurs mois.

On prépare une formulation agrochimique sous forme de poudre mouillable en mélangeant ensemble 46 parties d'Argirec B-24 (kaolin finement divisé, disponible chez Blancs Minéraux de Paris), 50 parties de 6-chloro-N-éthyl -N'-isopropyl-1,3,5-triazinediyl-2,4-diamine (atrazine, utilisée comme ingrédient actif dans des préparations herbicides), 3 parties d'un produit de condensation de naphtalène-sulfonate de sodium/formaldéhyde et une partie d'un alcool alkylique mixte (contenant 8 à 10 atomes de carbone) oxyéthylé (degré moyen d'éthoxylation de 6,9) absorbé sur une silice précipitée en un rapport en poids de 2:1. On broie ensuite le mélange obtenu pendant une minute dans un broyeur à lames rotatives tournant à 20 000 tr/min.

A la formulation agrochimique résultante, on mélange un échantillon de l'un des produits des Exemples 1 et 5, ou un échantillon de l'un d'eux qui a été entreposé pendant plusieurs mois, de manière à obtenir un taux d'antimousse de 0,1 %, 0,25 % ou 0,5 % par rapport à la formulation agrochimique totale. On effectue le mélange de la formulation agrochimique et de la poudre d'antimousse en utilisant un mélangeur à cylindres de laboratoire.

On soumet à des essais les mélanges résultants de formulation agrochimique/produit antimousse, pour déterminer le temps de mouillage, l'aptitude à la mise en suspension, la hauteur de mousse initiale et le temps d'effondrement de la mousse, en procédant selon les modes opératoires suivants.

Temps de mouillage

Dans un bécher de 250 cm³, on place 100 (± 1) cm³ d'eau dure titrée OMS (342 mg/litre). On prélève et pèse 5 (± 0,1) g de la formulation agrochimique, en veillant à garder la poudre en un état non tassé. On ajoute toute la poudre en une seule fois en la faisant tomber dans l'eau d'une position située au niveau du bord du bécher, sans provoquer d'agitation excessive de la surface du liquide. On déclenche un chronomètre lorsque la poudre à été ajoutée à l'eau et l'on prend note du temps (à la seconde la plus proche) mis pour que la poudre se mouille complètement, et s'enfonce, ce qui est le temps de mouillage.

Aptitude à la mise en suspension

On agite une quantité pesée (3 à 5 g) de la formulation agrochimique dans environ 20 cm³ d'eau dure titrée OMS (342 mg/litre). On transvase, avec rinçage, la suspension résultante dans une éprouvette graduée (100 cm³ ou 250 cm³) et l'on porte le volume à 100 cm³ en utilisant une quantité supplémentaire de l'eau dure titrée. On retourne l'éprouvette 30 fois et on la laisse au repos pendant 30 minutes. On retire les 90 % supérieurs du liquide à l'aide d'un tube d'aspiration, en veillant à ne déranger aucun sédiment. On transvase dans une capsule d'évaporation les 10 % restants du liquide que l'on dessèche jusqu'à poids constant dans un four à 50°C. On pèse la poudre résiduelle avec précision. Le pourcentage d'aptitude à la mise en suspension est obtenu d'après la relation :

$$\% \text{ d'aptitude à la mise en suspension} = \frac{10}{9} \times \frac{100(X - Y)}{X}$$

où : X est le poids de la formulation agrochimique utilisée;
Y est le poids de la poudre résiduelle.

Essai de moussage

On met en suspension 4,5 g de la formulation agrochimique dans 150 cm³ d'eau dure titrée OMS (342 mg/litre). On fait recirculer la suspension résultante pendant 5 minutes à partir d'un récipient de 0,5 dm³ ayant un diamètre de 8 cm, en utilisant une pompe péristaltique et un jet. On arrête ensuite la pompe et l'on prend note de la hauteur de mousse. On prend note du temps mis pour que toute la mousse disparaisse (temps d'effondrement de la mousse) si celui-ci est inférieur à 60 secondes. On prend également note de la hauteur de toute mousse restante au bout de 5 minutes, le cas échéant.

Le Tableau IV présente les compositions utilisées et les résultats obtenus.

Tableau IV

| Exemple ou Exemple Comparatif | Antimousse | | TM | Susp. | Hauteur de mousse (i) | |
|---|---|---|---|---|---|---|
| | Type (a)(c)(d) | Quantité (%) (e) | (s) (f) | (%) (h) | I (cm) | TE (s) |
| A | - | NEANT | 25 | 91 | 3 | 0,5* |
| 7 | 1 | 0,1 | 35 | 85 | 1,0 | 15 |
| 8 | 1 | 0,25 | 35 | 86 | 1,0 | 15 |
| 9 | 1 | 0,5 | 35 | 85 | 0,5 | 5 |
| 10 | 1R | 0,1 | 35 | 84 | 1,5 | 10 |
| 11 | 1R | 0,25 | 35 | 87 | 1,0 | < 5 |
| 12 | 1R | 0,5 | 30 | 85 | 0,5 | < 5 |
| 13 | 5 | 0,1 | 35 | 85 | 1,5 | 10 |
| 14 | 5 | 0,25 | 35 | 86 | 1,0 | 5 |
| 15 | 5 | 0,5 | 35 | 79 | < 0,5 | < 5 |
| 16 | 5R | 0,1 | 35 | 84 | 1,0 | < 5 |
| 17 | 5R | 0,25 | 30 | 83 | 0,5 | < 5 |
| 18 | 5R | 0,5 | 40 | 73 | 0,5 | < 5 |

(a) est comme défini dans la Remarque (a) sur le Tableau I.

(b) est comme défini dans la Remarque (c) sur le Tableau III.

(d) 5R est le produit de l'Exemple 5 après entreposage pendant 5 mois à la température ambiante (20-25°C).

(e) % en poids par rapport au poids du total de la formulation agrochimique (et non du total de la formulation agrochimique et de l'antimousse).

(f) TM est le temps de mouillage déterminé comme décrit.

(h) Susp. est l'aptitude à la mise en suspension (%) déterminée et calculée comme décrit.

(i) déterminée comme décrit dans l'Essai de moussage, I est la hauteur de mousse initiale et TE est le temps d'effondrement de la mousse, * indique que la mousse ne s'est pas effondrée et la valeur donnée est la hauteur de la mousse restant au bout de 5 minutes.

Exemple 19

On reprend le mode opératoire décrit à l'Exemple 1, excepté que l'on remplace l'agent tensio-actif non ionique liquide employé par un agent tensio-actif non ionique liquide obtenu par la condensation d'oxyde d'éthylène sur une base de polyoxypropylène-glycol. L'agent tensio-actif liquide contient environ 13 % en poids de motifs oxyde d'éthylène et son poids moléculaire moyen est d'environ 2070.

Exemple 20

On reprend le mode opératoire de l'Exemple 19, excepté que l'agent tensio-actif liquide contient environ 30 % en poids de motifs oxyde d'éthylène et son poids moléculaire moyen est d'environ 2580.

Exemple 21

On reprend le mode opératoire de l'Exemple 19, excepté que l'agent tensio-actif liquide contient 16 % en poids de motifs oxyde d'éthylène et son poids moléculaire moyen est d'environ 2860.

Exemple 22

On reprend le mode opératoire de l'Exemple 19, excepté que l'agent tensio-actif liquide contient environ 24 % en poids de motifs oxyde d'éthylène et son poids moléculaire moyen est d'environ 3560.

On soumet les produits décrits dans les Exemples 19 à 22 à l'essai d'inhibition de mousse précédemment exposé.

Le Tableau V présente les résultats obtenus.

Tableau V

| Essai N° | Type d'anti- mousse (j) | Temps (en secondes) pour atteindre les traits | | | | |
|----------|------------------------|---------|---------|---------|---------|---------|
| | | Trait 1 | Trait 2 | Trait 3 | Trait 4 | Trait 5 |
| XV | NEANT | 4 | 12 | 23 | 33 | 53 |
| XVI | 19 | 87 | 249 | 328 | 410 | 600 |
| XVII | 19R | 56 | 220 | 322 | 397 | 511 |
| XVIII | 20 | 30 | 116 | 187 | 298 | 500 |
| XIX | 20R | 46 | 207 | 294 | 363 | 425 |
| XX | 21 | 100 | 222 | 300 | 360 | 404 |
| XXI | 21R | 104 | 229 | 291 | 336 | 400 |
| XXII | 22 | 72 | 271 | 397 | 476 | 569 |
| XXIII | 22R | 85 | 261 | 340 | 412 | 600 |
| XXIV | 1N | 78 | 194 | 246 | 303 | 394 |
| XXV | 1NR | 47 | 190 | 256 | 311 | 406 |

Remarques sur le Tableau V

(j) 19, 20, 21 et 22 sont respectivement les produits des Exemples 19 à 22.
19R, 20R, 21R et 22R sont respectivement les produits des Exemples 19 à 22 qui ont été entreposés pendant trois semaines à la température ambiante.
1N est un nouvel échantillon fraîchement préparé du produit de l'Exemple 1.
1NR est un échantillon de 1N qui a été entreposé pendant trois semaines à la température ambiante.

**Revendications**

1. Composition antimousse solide, caractérisée en ce qu'elle comprend un solide absorbant particulaire comportant sur sa surface un mélange antimousse d'un composé antimousse renfermé de façon libérable dans un mélange d'un agent tensio-actif solide et d'un agent tensio-actif liquide.

2. Composition selon la revendication 1, caractérisée en ce que le composé antimousse est un polydiorganosiloxane.

3. Composition selon la revendication 2, caractérisée en ce que le polydiorganosiloxane est un liquide ayant une viscosité d'au moins 50 mm$^2$s$^{-1}$.

4. Composition selon la revendication 3, caractérisée en ce que la viscosité du polydiméthylsiloxane liquide est de 500 à 2500 mm$^2$s$^{-1}$.

5. Composition selon l'une quelconque des revendications 2 à 4, caractérisée en ce que le polydiorganosiloxane est un liquide et contient une silice hydrophobe.

6. Composition selon l'une quelconque des revendications 1 à 5, caractérisée en ce que le point de fusion de l'agent tensio-actif solide est d'au moins 30°C.

7. Composition selon la revendication 6, caractérisée en ce que le point de fusion de l'agent tensio-actif solide est d'au moins 40°C.

8. Composition selon l'une quelconque des revendications 1 à 7, caractérisée en ce que le point de fusion de l'agent tensio-actif solide n'est pas supérieur à 100°C.

9. Composition selon l'une quelconque des revendications 1 à 8, caractérisée en ce que l'agent tensio-actif solide est un agent tensio-actif non ionique.

10. Composition selon l'une quelconque des revendications 1 à 9, caractérisée en ce que le point de fusion de l'agent tensio-actif liquide est inférieur à 10°C.

11. Composition selon la revendication 10, caractérisée en ce que le point de fusion de l'agent tensio-actif liquide n'est pas supérieur à 0°C.

12. Composition selon l'une quelconque des revendications 1 à 11, caractérisée en ce que l'agent tensio-actif liquide est un agent tensio-actif non ionique.

13. Composition selon la revendication 12, caractérisée en ce que l'agent tensio-actif solide et l'agent tensio-actif liquide sont tous deux des agents tensio-actifs non ioniques.

14. Composition selon l'une quelconque des revendications 1 à 13, caractérisée en ce que l'un au moins de l'agent tensio-actif solide et de l'agent tensio-actif liquide est du type peu moussant.

15. Composition selon l'une quelconque des revendications 1 à 14, caractérisée en ce que l'un au moins de l'agent tensio-actif solide et de l'agent tensio-actif liquide est un composé oxyalkylé.

16. Composition selon la revendication 15, caractérisée en ce que l'agent tensio-actif solide est un ester, un phénol, un alcool, une amine ou un éther, polyoxyalkylé.

17. Composition selon la revendication 16, caractérisée en ce que l'agent tensio-actif solide contient, en moyenne, au moins 10 et au plus 400 groupes oxyalkylènes.

18. Composition selon la revendication 16 ou 17, caractérisée en ce que l'agent tensio-actif solide est un produit obtenu par oxyalkylation d'un ester préalablement préparé qui contient au moins un groupe -OH n'ayant pas réagi.

19. Composition selon la revendication 18, caractérisée en ce que l'agent tensio-actif solide est un ester mixte oxyéthylé du glycérol avec l'acide 12-hydroxy-octadécanoïque ou avec l'acide 12-hydroxy-9-octadécénoïque.

20. Composition selon l'une quelconque des revendications 15 à 19, caractérisée en ce que l'agent tensio-actif liquide est un ester, un phénol, un alcool, une amine ou un éther, polyoxyalkylé.

21. Composition selon la revendication 20, caractérisée en ce que l'agent tensio-actif liquide contient, en moyenne, moins de 20 groupes oxyalkylènes.

22. Composition selon l'une quelconque des revendications 15 à 19, caractérisée en ce que l'agent tensio-actif liquide est un copolymère oxyde d'éthylène/oxyde de propylène.

23. Composition selon la revendication 22, caractérisée en ce que l'agent tensio-actif liquide est du type :

$HO(PO)_b(EO)_c(PO)_dH$

ou $HO(EO)_e(PO)_f(EO)_gH$

où : EO représente un groupe oxyde d'éthylène ; PO représente un groupe oxyde de propylène ; b, c, d, e, f et g sont des nombres entiers ;

la valeur moyenne de f, ou de la somme b + d, est de 14 à 75 ;

la valeur moyenne de c, ou de la somme e + g, est de 3 à 45 ; et

les valeurs de b, c et d, ou de e, f et g, sont telles que les motifs oxyde d'éthylène constituent moins de 50 % en poids du copolymère.

24. Composition selon la revendication 23, caractérisée en ce que les valeurs de b, c et d, ou de e, f et g, sont telles que les motifs oxyde d'éthylène constituent moins de 45 % en poids du copolymère.

25. Composition selon la revendication 24, caractérisée en ce que les valeurs de b, c et d, ou de e, f et g, sont telles que les motifs oxyde d'éthylène constituent au moins 10 % en poids du copolymère.

26. Composition selon l'une quelconque des revendications 23 à 25, caractérisée en ce que le poids moléculaire moyen du copolymère est d'au moins 1000 et d'au plus 10 000.

27. Composition selon l'une quelconque des revendications 1 à 26, caractérisée en ce que l'agent tensio-actif solide, l'agent tensio-actif liquide ou un mélange d'entre-eux, contient un agent épaississant.

28. Composition selon l'une quelconque des revendications 1 à 27, caractérisée en ce que le solide absorbant particulaire est un oxyde, carbonate ou silicate minéral.

29. Composition selon la revendication 28, caractérisée en ce que le solide absorbant particulaire est une silice ayant une surface spécifique d'au moins 200 m²g⁻¹.

30. Composition selon la revendication 1, caractérisée en ce qu'elle consiste essentiellement en une silice hydrophile ayant une surface spécifique d'au moins 200 m²g⁻¹ et comportant sur sa surface un polydiméthylsiloxane ayant une viscosité de 500 à 2500 mm²s⁻¹ et contenant une silice hydrophobe ayant une surface spécifique d'au moins 50 m²g⁻¹, le polydiméthylsiloxane étant renfermé de façon libérable dans un mélange d'un ester mixte oxyéthylé du glycérol avec soit l'acide 12-hydroxy-octadécanoïque, soit l'acide 12-hydroxy-9-octadécènoïque, d'un copolymère séquencé oxyde d'éthylène/oxyde de propylène obtenu soit par la condensation d'oxyde de propylène sur une base de polyoxyéthylène-glycol, soit par la condensation d'oxyde d'éthylène sur une base de polyoxypropylène-glycol, et d'un agent épaississant qui est une silice hydrophile ayant une surface spécifique d'au moins 100 m²g⁻¹.

31. Composition selon l'une quelconque des revendications 1 à 30, caractérisée en ce que le composé antimousse est présent en une proportion de 5 % à 25 % en poids de la composition.

32. Composition selon la revendication 31, caractérisée en ce que le composé antimousse est un liquide de silicone et contient un solide particulaire en une quantité de 1 % à 20 % du poids du composé antimousse.

33. Composition selon l'une quelconque des revendications 1 à 32, caractérisée en ce que l'agent tensio-actif solide est présent en une proportion de 5 % à 35 % en poids de la composition.

34. Composition selon l'une quelconque des revendications 1 à 33, caractérisée en ce que l'agent tensio-actif liquide est présent en une proportion de 20 % à 60 % en poids de la composition.

35. Composition selon l'une quelconque des revendications 1 à 34, caractérisée en ce qu'elle comprend un agent épaississant en une proportion ne dépassant pas 5 % en poids de la composition.

36. Composition selon l'une quelconque des revendications 1 à 35, caractérisée en ce que le solide absorbant particulaire est présent en une proportion de 10 % à 50 % en poids de la composition.

37. Composition selon l'une quelconque des revendications 1 à 36, caractérisée en ce qu'elle est sous forme de poudre.

38. Composition agrochimique, caractérisée en ce qu'elle contient une composition antimousse telle que revendiquée dans l'une quelconque des revendications 1 à 37.

39. Composition selon la revendication 38, caractérisée en ce qu'elle consiste en un mélange de matières solides.

40. Composition selon la revendication 38, caractérisée en ce qu'elle est liquide et consiste en une dispersion ou une émulsion dans l'eau d'un produit agrochimique.

41. Composition selon l'une quelconque des revendications 38 à 40, caractérisée en ce qu'elle contient 0,02 à 1 % en poids de la composition antimousse par rapport à la composition agrochimique totale.

42. Procédé pour la préparation d'une composition telle que revendiquée dans l'une quelconque des revendications 1 à 37, caractérisé en ce qu'il consiste à revêtir le solide absorbant particulaire avec un mélange liquide de tous les autres composants de la composition.

43. Procédé selon la revendication 42, caractérisé en ce que le mélange liquide est pulvérisé sur le solide absorbant particulaire tandis que le solide est soumis à une agitation.

44. Procédé selon la revendication 42 ou 43, caractérisé en ce que le mélange liquide est à une température d'au moins 50°C.

45. Procédé selon l'une quelconque des revendications 42 à 44, caractérisé en ce que le mélange liquide est obtenu en mélangeant ensemble l'agent tensio-actif liquide et le composé anti-mousse, en ajoutant au mélange l'agent tensio-actif à l'état fondu et en ajoutant facultativement un agent épaississant au mélange ainsi obtenu.